(19)

Europäisches Patentamt

European Patent Office

Office européen des brevets

(11) **EP 4 783 588 A1**

(12) **EUROPEAN PATENT APPLICATION**

(43) Date of publication:
    **29.07.2026 Bulletin 2026/31**

(21) Application number: **25205427.5**

(22) Date of filing: **29.09.2025**

(51) International Patent Classification (IPC):
    **H04N 21/2343** (2011.01)   **H04N 21/24** (2011.01)
    **H04N 21/845** (2011.01)   **H04N 21/234** (2011.01)

(52) Cooperative Patent Classification (CPC):
    **H04N 21/8456; H04N 21/23418; H04N 21/23439;**
    **H04N 21/2402**

(84) Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **GE KH LA MA MD TN**

(30) Priority: **28.01.2025 US 202519039709**

(71) Applicants:
    • **Disney Enterprises, Inc.**
      **Burbank, CA 91521 (US)**
    • **Beijing YoJaJa Software**
      **Technology Development Co., Ltd.**
      **Beijing 100015 (CN)**

(72) Inventors:
    • **Huang, Lemei**
      **Beijing (CN)**
    • **Dai, Tongyu**
      **Beijing (CN)**
    • **Zhang, Wenhao**
      **Beijing (CN)**
    • **Chen, Si**
      **Beijing (CN)**
    • **Howe, Thomas**
      **Chicago (US)**

(74) Representative: **Müller-Boré & Partner**
    **Patentanwälte PartG mbB**
    **Friedenheimer Brücke 21**
    **80639 München (DE)**

(54) **PROFILE FILTERING BASED ON QUALITY OF SERVICE TARGET IN CONTENT DELIVERY**

(57)    In some embodiments, a method determines an instance of content to be delivered to a client device. The instance of content includes a plurality of segments that is associated with a plurality of profiles. A target metric and a bandwidth distribution are determined. The method determines a performance of the target metric based on the bandwidth distribution and a model for selecting a top profile for the plurality of segments. The model includes a set of conditions. The method solves the model based on the performance of the target metric where solving the model provides a solution that meets the set of conditions and outputs the top profile for each segment. The top profile for each segment for delivery to the client device. The top profile for each segment is used to remove profiles when requesting segments in the plurality of segments during playback of the instance of content.

**FIG. 1**

EP 4 783 588 A1

**Description**

**BACKGROUND**

In adaptive bitrate streaming, content is encoded in multiple profiles with different bitrates, qualities, or bitrates and qualities. Then, during playback, a media player may adaptively switch between the different profiles according to a condition, such as available bandwidth. However, not all the profiles may be necessary for all types of devices. For example, on some devices, such as smartphones with limited computing resources or smaller screens, users may not notice a quality improvement of selecting a profile with a very high bitrate. However, providing a very high bitrate may result in a higher risk of rebuffering where not enough content is available to meet the playback rate of the media player, a higher cost for users due to the delivery of cellular data, or a higher cost for a company that is transferring the data.

**BRIEF DESCRIPTION OF THE DRAWINGS**

The included drawings are for illustrative purposes and serve only to provide examples of possible structures and operations for the disclosed inventive systems, apparatus, methods and computer program products. These drawings in no way limit any changes in form and detail that may be made by one skilled in the art without departing from the spirit and scope of the disclosed implementations.

FIG. 1 depicts a simplified system for performing profile filtering according to some embodiments.

FIG. 2 depicts a simplified flowchart of a method for predicting the performance of top profile decisions according to some embodiments.

FIG. 3 depicts a simplified flowchart by method for deciding the top profile constraints according to some embodiments.

FIG. 4 depicts a simplified flowchart of a method for performing the top profile selection using a linear programming method according to some embodiments.

FIG. 5 illustrates one example of a computing device according to some embodiments.

**DETAILED DESCRIPTION**

Described herein are techniques for a content delivery system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

System Overview

In some embodiments, a system uses a profile filtering process to exclude some profiles that are available to client devices. Content, such as a video, audio, video and audio, or other multimedia content, may be encoded in multiple profiles that correspond to different levels, which may be different levels of bitrates, quality, or bitrate and quality. The profiles may be included in a profile ladder.

The system may receive adaptable parameter settings that meet specified targets, such as quality of service targets. In some embodiments, the system may use targets of a maximum tolerable quality loss or a minimum required data saved ratio, but other targets may be used based on the performance metric that is used. The value of the target may also be varied, such as an absolute value or percentage may be used for either. The maximum tolerable quality loss may be the maximum amount of quality that is lost by removing profiles from the profile ladder. The minimum required data saved ratio may be the minimum data saved ratio based on data saved by removing one of the profiles. These parameters may be adjusted, and based on the values, the process may analyze the profiles for multiple segments to select the top profiles for segments of the content. The top profiles may be sent to a client device. Then, the client device uses the top profiles to perform profile filtering of a profile ladder. The profile filtering may remove profiles from the profile ladder. Accordingly, an adaptive bitrate algorithm may not be able to select these profiles during playback of the content.

The selection of the top profiles using the parameters may improve the content delivery process. For example, the profiles that are removed may cause the delivery of the content to optimally meet the target quality of service that is desired. The system may determine the optimal top profiles for segments and send top profile constraints that specify the top profiles for segments to the client device. In some embodiments, the client device does not have to calculate the top profiles, which saves computing resources. Rather, the client device can apply the specified top profiles from the top profile constraints to a profile ladder to remove the appropriate profiles. Also, the top profile constraints may result in profiles being removed at the client device that may meet the target quality of service when the content is delivered, which may result in resources being saved or being used more efficiently while delivering content. For example, data being transferred through the network may be saved due to removing profiles that may not be necessary for a type of device. Also, the delivery may be more efficient by reducing rebuffers that may be experienced due to the profiles that may be likely to cause rebuffers.

The selection process of the top profiles may also save resources. For example, the system may formulate a model that includes conditions to select the top profile based on the QoS target. Then, the system determines the top profile for each segment of an instance of content as output of the model. That is, the system solves the model based on the conditions, which yields the top profile for each segment. This may save computing resources by directly computing the top profile for each segment. When the instance of content is requested by a client device, computing the top profile constraints may need to be performed in a limited period of time. The process may save computing resources and also compute the top profile more efficiently compared to computing all possible combinations and selecting one of the possible combinations.

## System

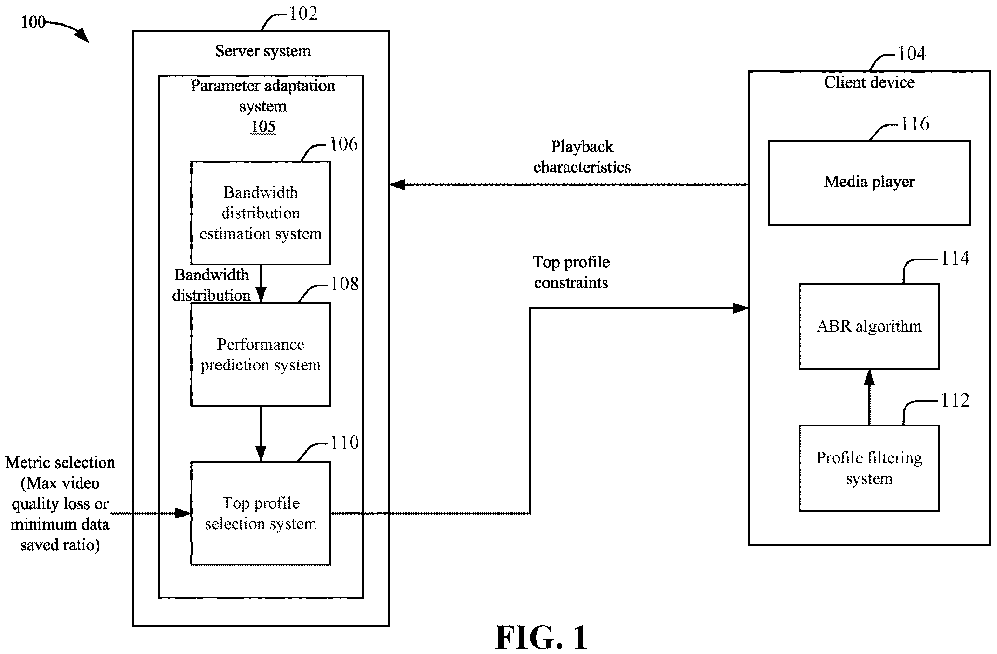

FIG. 1 depicts a simplified system 100 for performing profile filtering according to some embodiments. System 100 includes a server system 102 and a client device 104. Server system 102 may include one or more computing devices that may calculate top profiles for segments of an instance of content. The top profiles may be the highest profile that can be selected for the segment (e.g., the profile with the highest bitrate or quality). The top profiles may be calculated based on receiving a request to play an instance of content, such as a request to play a video from a content delivery service. The content may have been encoded in multiple profiles in a profile ladder that are available for download in adaptive bitrate streaming. Server system 102 may generate top profile constraints that may specify the top profile for segments in the instance of content, and sends the top profile constraints to client device 104. Client device 104 receives top profile constraints and uses the top profile constraints to remove profiles from the profile ladder. In some embodiments, client device 104 does not need to calculate the top profiles, such as by calculating the top profiles from a target quality.

Although one client device 104 is shown, multiple client devices 104 may be used and can receive the top profile constraints. In some embodiments, server system 102 may dynamically determine the top profile constraints for different client devices 104. That is, a first client device may receive first top profile constraints and a second client device may receive second top profile constraints for the same video. Different videos may also have different top profile constraints for the same client device.

Client device 104 includes a profile filtering system 112, an adaptive bitrate (ABR) algorithm 114, and a media player 116. Profile filtering system 112 receives the top profile constraints from server system 102. The generation of the top profile constraints will be described in more detail below. Then, profile filtering system 112 determines a highest profile that ABR algorithm 114 can select. The highest profile may be referred to as the top profile. As discussed above, a profile ladder includes profiles that can be used for requesting different versions of the content. The profiles are associated with one or more characteristics, such as a bitrate characteristic, a quality characteristic, or a bitrate and quality characteristic. The bitrate may be the number of bits per second that is associated with a segment, such as the bitrate at which the segment was encoded. The quality characteristic may indicate the quality of a video (e.g., a resolution or other quality metric). A resolution of the video may be based on a number of pixels in a frame, and a higher resolution is associated with a higher quality. A higher bitrate may be associated with a higher quality also. The profiles may be organized in levels in the profile ladder, such as levels 0-10. The level of a profile in the profile ladder may be determined based on how the video is transcoded for that level. For example, a level 0 profile may be encoded at 200kbps, a level 1 profile may be encoded at 400kbps, and so on. A resolution of 640x360 (360p) pixels may be associated with the level 0 profile and a resolution of 1280x720 (720p) pixels may also be associated with the level 1 profile. The resolution may represent a number of pixels horizontally and vertically. In general, a lower level profile in the profile ladder may be considered a lower quality profile compared to a higher level profile.

Profile filtering system 112 uses the top profile constraints to apply a top profile for each segment of the content. For example, content may be divided into portions referred to as segments. A restriction is stored for adaptive bitrate algorithm 114 such that it cannot select profiles that are associated with bitrates that are above the top profile (e.g., above a bitrate of the top profile) for respective segments. Profile filtering system 112 may receive the top profile from the top profile constraints, and does not need to calculate the top profile from another value, such as a target quality. This saves computing resources at client device 104.

During playback, adaptive bit rate algorithm 114 may analyze the available bandwidth during the delivery of the segments of the content. Adaptive bitrate algorithm 114 may select one of the available profiles (available does not include any removed profiles), and request a segment at the selected profile. Media player 116 may display the content for the segment upon receiving the content.

On server system 102, a parameter adaptation system 105 may generate the top profile constraints. A bandwidth distribution estimation system 106 may generate a bandwidth distribution. To estimate the bandwidth distribution for sessions more precisely, bandwidth distribution estimation system 106 associates a set of features (e.g., region, device, Internet service provider (ISP), etc.) to every session. Bandwidth distribution estimation system 106 collects historical bandwidth information. At the end of the playback of content, playback characteristics, such as the average download bandwidth (or any other downloading information that can be used to infer the average download bandwidth), is reported and uploaded to server system 102, such as from client device 104, together with the associated features of the playback session, such as region, ISP, etc. Then, bandwidth distribution estimation system 106 estimates the bandwidth distribution. When a playback of content starts, its associated features are sent to server system 102, such as from client device 104. On bandwidth distribution estimation system 106, all the historical bandwidth data for sessions with the same or similar feature values to this session may be grouped together, and the estimated bandwidth distribution $f(r)$ may be derived from it, where $f(r)$ is the probability density function of the download bandwidth. The bandwidth distribution may be aggregated by features, such as from the same region. Then, there may be many different bandwidth distributions from different regions.

A performance prediction system 108 may provide a method to generate the formulation of performance metrics regarding the top profile decision, assuming the top profile decision as an independent variable. The performance metrics may be a metric of a video quality loss and a metric of data saved (e.g., a data saved ratio) of each top profile decision. Performance prediction system 108 receives a bandwidth distribution that is used to predict the performance. As discussed above, the bandwidth distribution may be a probability distribution of the download bandwidth estimated by bandwidth distribution estimation system 106, based on the historical bandwidth information of the sessions with the same or similar feature values to the current session being played by client device 104.

A top profile selection system 110 receives the QoS target and outputs the top profile constraints. The QoS target may be from different metrics that may be used to select the top profiles for segments. In some embodiments, a maximum video quality loss or a minimum data saved ratio may be selected. A combination of the two metrics may be used also, or other metrics may be used. The maximum video quality loss may be an absolute delta between two video quality values. Video quality values may be evaluated by a metric, such as video multi-method assessment fusion (VMAF) peak signal to noise ratio (PSNR) or other metrics. A maximum video quality loss of a value, such as two, means that by limiting the top profile that can be selected, the average video quality perceived by the user by the metric is expected to be at most lowered by two units as measured by VMAF. The minimum data saved ratio may be a percentage threshold of data saved. For example, a minimum data saved ratio of 5% means that by limiting the top profile that can be selected, client device 104 is expected to save at least 5% of the downloaded data for the content by not having the profiles with higher bitrates above the top profile available. Although a ratio is discussed, the metric may not be ratio, such as it could be based on an amount of data saved. In general, the data saved metric is based on data saved whether expressed as a ratio or another number.

Using the metric that is selected, top profile selection system 110 outputs the optimal top profiles for segments such that the QoS target is met. Here "optimal" means that the top profile decision not only meets the QoS target, but also performs the best regarding other metrics. For example, if the input to top profile selection system 110 is the maximum tolerable video quality loss, the optimal top profile decision will be the one that can maximize the data saved ratio without exceeding the given tolerance for video quality loss. If the input is the minimum required data saved ratio, the optimal top profile decision will be the one that can minimize the video quality loss while ensuring that the data saved ratio is still above the given lower bound. Top profile selection system 110 may use a model to formulate the optimization problem. The solution to the model that is optimal per the model's conditions is the optimal top profile decision for top profile selection system 110 to output.

In a simplified example, suppose a video has N=2 segments and is encoded into M=3 profiles. Performance prediction system 108 formulates the performance metrics regarding a top profile decision $X$ as the independent variable. $X$ is a vector with $N \times M$ elements that represents the top profile decision, also can be noted as $\{x_{ij}\}$. If $x_{ij} = 1$, this means that the top profile, which is the highest profile that can be selected by the ABR algorithm 114, for segment i is profile j. It is required that $\sum_{j=0}^{M-1} x_{ij}$ must be 1. For example, a vector of $X = [x_{00}, x_{01}, x_{02}, x_{10}, x_{11}, x_{12}] = [0,0,1,0,1,0]$. It means that the top profile decision is [2, 1], e.g., the top profile is profile #2 for segment 0 and profile #1 for segment 1 because only $x_{02}$ and $x_{11}$ are equal to 1.

Performance prediction system 108 may generate the formulation of performance metrics, such as the video quality loss and data saved ratio, all of which are functions of the variable $X$. A formulation of the video quality loss may be

$$VQL(X) = 79 - \frac{1}{2}[60(x_{00} + x_{10}) + 77.5(x_{01} + x_{11}) + 79(x_{02} + x_{12})]$$ , and a formulation of the data saved ratio may be $DSR(X) = \frac{21.914 - [2.44(x_{00}+x_{10}) + 5.107(x_{01}+x_{11}) + 10.957(x_{02}+x_{12})]}{21.914}$ . The computation of the formulations requires the bandwidth distribution from bandwidth distribution estimation system 106, together with one or more characteristics of the profiles, such as the bitrates, qualities, and the segment sizes. The process will be described in more detail below.

If top profile selection system 110 receives a maximum video quality loss of 5 as the QoS target, it will find an optimal solution $X^*$ to the model that can yield a maximum data saved ratio $DSR(X^*)$ when the video quality loss $VQL(X^*)$ is within 5. The output may be $X^* = [x_{00}, x_{01}, x_{02}, x_{10}, x_{11}, x_{12}] = [0,1,0,0,1,0]$. This means that the top profile decision is [1, 1], e.g., the top profile is profile #1 for segment 0 (e.g., $x_{01} = 1$) and profile #1 for segment 1 (e.g., $x_{11} = 1$). If the QoS target is a minimum data saved ratio of 5%, the optimal solution $X^*$ to the model will be the one that can yield a minimum video quality loss $VQL(X^*)$ when the data saved ratio $DSR(X^*)$ is over 5%. The output may be $X^* = [x_{00}, x_{01}, x_{02}, x_{10}, x_{11}, x_{12}] = [0,0,1,0,1,0]$. This means that the top profile decision is [2, 1], e.g., the top profile is profile #2 (e.g., $x_{02} = 1$) for the first segment and profile #1 for the second segment (e.g., $x_{11} = 1$).

The following will now describe the selection process for determining the top profile constraints in more detail.

<u>Performance Prediction</u>

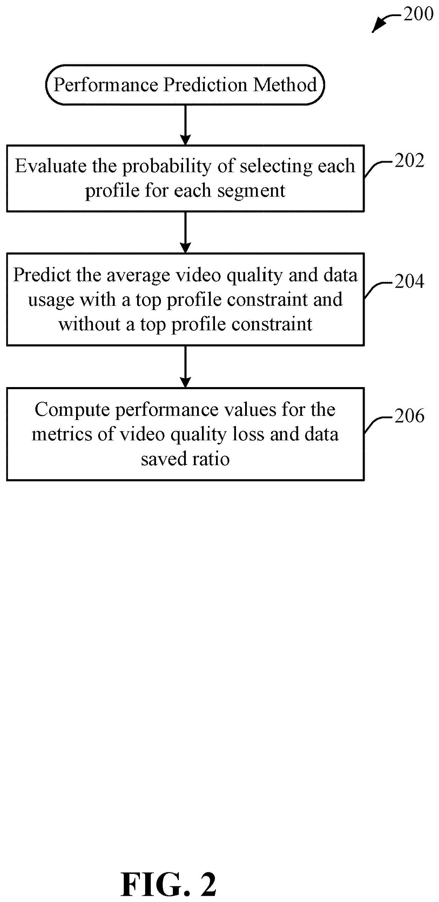

FIG. 2 depicts a simplified flowchart 200 of a method for predicting the performance of top profile decisions according to some embodiments. The performance prediction may include the following steps of evaluating the probability of selecting each profile for each segment, predicting the average video quality and data usage with or without the top profile constraint, and computing the metrics, such as the video quality loss and data saved ratio.

At 202, performance prediction system 108 evaluates the probability of selecting each profile for each segment. Performance prediction system 108 receives the estimated bandwidth distribution from bandwidth distribution estimation system 106 to evaluate the probability of selecting each profile for each segment. The bandwidth distribution may be determined based on historical bandwidth information that is collected from client device 104 and gathered in bandwidth distribution estimation system 106. As discussed above, the historical bandwidth information may be the available bandwidth that is experienced while downloading content. Bandwidth distribution estimation system 106 may estimate the bandwidth distribution based on the historical information from playback sessions with same or similar feature values to the current playback session.

In some examples, the bandwidth distribution estimated by bandwidth distribution estimation system 106 may be as follows in Table III:

Table III

| Bandwidth | 200kbps | 1200kpbs | 2000kbps |
|---|---|---|---|
| Probability | 30% | 60% | 10% |

In Table III, the bandwidths may be 200kbps, 1200kbps, and 2000kbps, and the probability of experiencing the respective bandwidth may be 30%, 60%, and 10%, respectively. This means that according to the estimation, there may be a 30% chance that the bandwidth experienced at client device 104 is 200kbps, a 60% chance that the bandwidth experienced is 1200kbps, and a 10% chance that the bandwidth experienced is 2000kbps. Accordingly, the most likely bandwidth experienced may be 1200kbps and the least likely bandwidth is 2000kbps.

If the instance of content is encoded into three different versions with three different profiles, the following may be the actual profiles and probability of selecting the profiles for a segment i:

Table III

| Profile | Profile 0 | Profile 1 | Profile 2 |
|---|---|---|---|
| j | 0 | 1 | 2 |
| $b_{ij}$ | 400kbps | 1000kbps | 4500kbps |
| $p_{ij}$ | 30% | 70% | 0% |

In Table III, $P = \{p_{ij}\}$, where $p_{ij}$ refers to the probability of selecting profile j for segment i, and $b_{ij}$ is the bitrate of the profile. Here, the three version qualities may be 360p, 720p, and 1080p for profiles 0, 1, and 2, respectively. The bitrates for the respective profiles are 400kbps, 1000kbps, and 4500kbps, respectively, for profiles 0, 1, and 2. The probability of selecting the profile 0 is 30%, the probability of selecting the profile 1 is 70%, and the probability of selecting the profile 2 is 0%. The probability of selecting profile 1 with an associated bitrate of 1000 kbps depends on the probability of bandwidth falling in [1000kbps, 4500kbps). It may be 70% because it is expected that the available bandwidth may be at 1200 kbps with 60% expectancy and 2000 kbps with a 10% expectancy. The probability of selecting profile 2 is 0% because it depends on the probability of bandwidth being >= 4500kbps, which is impossible with the given bandwidth distribution.

In some embodiments, the following process may be used. To evaluate the probability of selecting each profile for each segment, performance prediction system 108 receives the bandwidth distribution, which can be implemented by sending the download information to the server system 102 and calculating the bandwidth distribution on bandwidth distribution estimation system 106. Let $f(r)$ be the probability density function of the download bandwidth, and thus $\int_a^b f(r)dr$ is the probability of bandwidth falling between a and b. Let $P = \{p_{ij}\}$, where $p_{ij}$ refers to the probability of selecting profile j for segment i, and a restriction is $\sum_j p_{ij} = 1$.

Assuming that a profile will be selected when the download bandwidth is above an associated bitrate for the profile, but below the bitrate of the next higher profile, the probability of selecting bitrate j for segment i is:

$$p_{ij} = \int_{LB_{ij}}^{UP_{ij}} f(r)dr,$$

where $LB_{ij}$ is the lower bound for the integral and $UB_{ij}$ is the upper bound. From this, the following is determined:

- $LB_{ij} = b_{i,j}$, when $j > 0$
- $LB_{ij} = -\infty$, when $j = 0$.

For the upper bound, the following is determined:

- $UB_{ij} = b_{i,j+1}$, when $j < M - 1$
- $UB_{ij} = \infty$, when $M \geq 1$ and $j = M - 1$.

Here, j refers to the profile index (e.g., 0, 1, 2 in Table III) when sorting all the profiles in ascending order, and $b_{i,j}$ refers to the bitrate value of the j-th profile (e.g., 400kbps, 1000kbps, 4500kbps in Table III).

At 204, performance prediction system 108 predicts the average video quality and data usage with a top profile constraint and without a top profile constraint. Using the top profile constraint may constrain the selection of profiles that are available and without the top profile constraint may not constrain any selection of profiles. Performance prediction system 108 may determine the predicted video quality without constraints and the data usage without constraints. Also, performance prediction system 108 may determine the predicted video quality with the constraint and the predicted data usage with the constraint. The performance using the two metrics may be determined even though one metric may be designated as the target. This is because the top profile decision may use both metrics when determining the top profile based on the target.

The following example for a segment may be used.

Table IV

| Profile | Profile 0 | Profile 1 | Profile 2 |
|---|---|---|---|
| j | 0 | 1 | 2 |
| $q_{ij}$ | 60 | 85 | 90 |
| $s_{ij}$ | 2.44MB | 6.25MB | 25.75MB |
| Estimated selection probability $p_{ij}$ | 30% | 40% | 30% |

In this example, the following may be assumed:

- the video has n segments and is encoded into m profiles.

- $P = \{P_{ij}\}$ is the estimated probability of selecting profile j for segment i.

- $q_{ij}$ is the video quality of segment i with profile j. As mentioned above, this can be measured by any quantitative video quality metric such as VMAF.

- $s_{ij}$ is the size of segment i with profile j (in bytes).

The estimated selection probability may be 30% for profile 0, 40% for profile 1, and 30% for profile 2. If there is no top profile constraint, e.g., the media player 116 could select any of the 3 profiles, then:

- the expected video quality $\overline{Q}_i$ for this segment is 30% × 60 + 40% × 85 + 30% × 90 = 79.

- the expected data usage $\overline{U}_i$ for this segment is 30% × 2.44 + 40% × 6.25 + 30% × 25.75 = 10.957MB.

When the top profile for this segment is profile 1, then:

- the expected video quality $Q_{i1}$ for this segment is 30% × 60 + 70% × 85 = 77.5.

- the expected data usage $U_{i1}$ for this segment is 30% × 2.44 + 70% × 6.25 = 5.107MB.

When the top profile for this segment i is profile j, the expected video quality $Q_{ij}$ and the expected data usage $U_{ij}$ can be calculated likewise. In this example, the two metrics when profiles 0, 1, 2 become the top profile are as follows.

Table V

| Top Profile | Profile 0 | Profile 1 | Profile 2 |
|---|---|---|---|
| j | 0 | 1 | 2 |
| $Q_{ij}$ | 60 (100% × 60) | 77.5 (30% × 60 + 70% × 85) | 79 (30% × 60 + 40% × 85 +30% × 90) |
| $U_{ij}$ | 2.44MB (100% × 2.44) | 5.107MB (30% × 2.44 +70% × 6.25) | 10.957MB (30% × 2.44 +40% × 6.25 +30% × 25.75) |

Let $X = [x_{i0}, x_{i1}, x_{i2}]$ represent the top profile for segment i (where $x_{ij} = 1$ means the top profile is profile j),

- the expected video quality with the constraint $Q_i = 60x_{i0} + 77.5x_{i1} + 79x_{i2}$.

- the expected data usage with the constraint $U_i = 2.44x_{i0} + 5.107x_{i1} + 10.957x_{i2}$.

Given any bitrate constraints $X = \{x_{ij}\}$, the bitrate selection probability $P = \{p_{ij}\}$, the video qualities $\{q_{ij}\}$, and the segment sizes $\{s_{ij}\}$, the following metrics can be calculated as follows. For segment i, the video quality and the data usage for a single segment can be calculated as follows:

- the expected video quality without the constraints $\overline{Q}_i = \sum_{k=0}^{M-1} p_{ik} q_{ik}$ .

- the expected data usage without the constraints $\overline{U}_i = \sum_{k=0}^{M-1} p_{ik} s_{ik}$ .

- the expected video quality when the top bitrate is j $Q_{ij} = \sum_{k=0}^{j} p_{ik} q_{ik} + \sum_{k=j+1}^{M-1} p_{ik} q_{ij}$ , and thus the expected video quality with the constraints is $Q_i(X) = \sum_{j=0}^{M-1} x_{ij} Q_{ij}$ .

- the predicted data usage when the top bitrate is j $U_{ij} = \sum_{k=0}^{j} p_{ik} s_{ik} + \sum_{k=j+1}^{M-1} p_{ik} s_{ij}$ , and thus the expected data usage with the constraints is $U_i(X) = \sum_{j=0}^{M-1} x_{ij} U_{ij}$ .

When there are multiple segments, the metric average video quality is the mean of the video qualities of all the segments, and the metric data usage is the sum of the data usage of all the segments, such as:

- the predicted average video quality without the constraint $\overline{Q} = \frac{1}{N} \sum_{i=0}^{N-1} \overline{Q}_i$ .

- the predicted data usage without the constraint $\overline{U} = \sum_{i=0}^{N-1} \overline{U}_i$ .

- the predicted average video quality with the constraint $Q(X) = \frac{1}{N}\sum_{i=0}^{N-1} Q_i(X)$ .

- the predicted data usage with the constraint $U(X) = \sum_{i=0}^{N-1} U_i(X)$ .

For example, if segments are identical (although the segments may not be identical) from the previous example in a video,

- the expected video qualities without constraint for both segment 0 and segment 1 will be the same, e.g., $\overline{Q}_0 = \overline{Q}_1 = 79$.

- the expected data usages without constraint for both segment 0 and segment 1 are the same, e.g., $\overline{U}_0 = \overline{U}_1 = 10.957MB$

- the expected video qualities with the constraint of top profile j for both segment 0 and segment 1 are the same, e.g., $Q_{0j} = Q_{1j} = Q_{ij}$ (in table V), for every $j = 0,1,2$.

- the expected data usages with the constraint of top profile j for both segment 0 and segment 1 are the same, e.g., $U_{0j} = U_{1j} = U_{ij}$ (in table V), for every $j = 0,1,2$.

Thus, performance prediction system 108 calculates the following:

- 

$$\overline{Q} = \frac{1}{2}(\overline{Q}_0 + \overline{Q}_1) = 79$$

- 

$$\overline{U} = \overline{U}_0 + \overline{U}_1 = 21.914\text{MB}$$

- 

$$Q(X) = \frac{1}{2}\left(\sum_{j=0}^{2} x_{0j}Q_{0j} + \sum_{j=0}^{2} x_{1j}Q_{1j}\right) = \frac{1}{2}[60(x_{00} + x_{10}) + 77.5(x_{01} + x_{11}) + 79(x_{02} + x_{12})]$$

- 

$$U(X) = \frac{1}{2}\left(\sum_{j=0}^{2} x_{0j}U_{0j} + \sum_{j=0}^{2} x_{1j}U_{1j}\right) = 2.44(x_{00} + x_{10}) + 5.107(x_{01} + x_{11}) + 10.957(x_{02} + x_{12})$$

Once computing the average video quality and data usage with and without constraints, at 206, performance prediction system 108 computes performance values for the metrics of video quality loss and data saved ratio. In some embodiments, two metrics may be used to evaluate the performance of a top profile decision of video quality loss and data saved ratio:

- video quality loss (VQL): the delta between the predicted average video quality with the constraint Q and the predicted average video quality without the constraint $\overline{Q}$, e.g., *VQL(X) = $\overline{Q}$ - Q(X)*

- data saved ratio (DSR): the relative delta between the predicted data usage with the constraint U and the predicted data usage without the constraint $\overline{U}$, e.g., $DSR(X) = \frac{\overline{U} - U(X)}{\overline{U}}$ .

Given the bandwidth distribution f(r), performance prediction system 108 outputs the formulation of the predicted video quality loss and data saved ratio in terms of the top profile decision variable X. Top profile selection system 110 then computes the optimal top profile constraints according to some embodiments.

Top Profile Selection

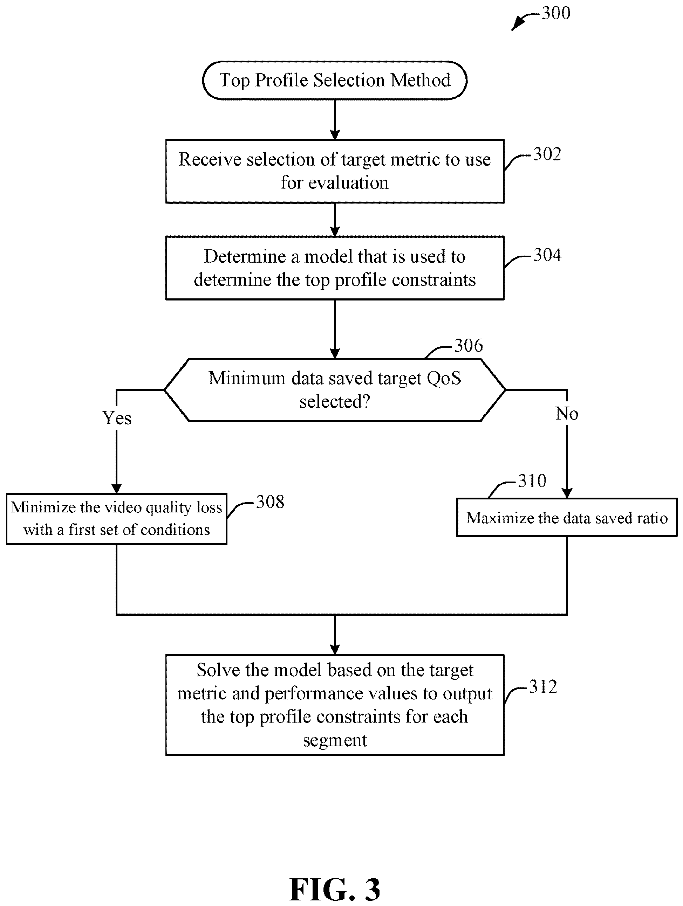

FIG. 3 depicts a simplified flowchart 300 by method for selecting the target video quality according to some embodiments. In this process, top profile selection system 110 determines the optimal top profile decisions as top profile constraints.

At 302, top profile selection system 110 receives a selection of a target metric to use for evaluation. For example, the target metric may be the maximum video quality loss or a minimum data saved ratio. A value may be received for the target metric, such as the maximum video quality loss is set to 10. It can be either the lower bound of the data saved ratio $DSR_t$ or the upper bound of the video quality loss $VQL_t$, where t means target. Here, the video quality loss due to limiting the top profile should be limited to the value or below. This limits the quality that is lost due to limits on the top profile. Also, the minimum data saved ratio should be limited to the value or above. This makes sure there is an amount of data saved due to limits on the top profile.

At 304, top profile selection system 110 determines a model that is used to determine the top profile constraints. The model that is used may be different based on the QoS target that is received. The different models will be described in more detail below. At 306, top profile selection system 110 determines if the minimum data saved QoS target is selected.

At 308, when QoS target is the minimum data saved ratio, if the minimum data saved ratio = $R$ (a non-negative value), top profile selection system 110 minimizes the video quality loss with a first set of conditions. The objective function for a model of top profile selection system 110 to minimize is the video quality loss given the top profile decision X, e.g., $VQL(X)$. As for the first set of conditions, the data saved ratio $DSR(X)$ under the given top profile decision $X$ should not be less than the value specified, such as the required lower bound $R$, which leads to $DSR(X) \geq R$. Also, there could be one and only one top profile for each segment $i$. Therefore, for every segment i, the following is used:

$$\sum_{j=0}^{M-1} x_{ij} = 1.$$

The left part of the equation can be regarded as the total number of top profile(s) for segment $i$, and the right part ensures the number is 1. The variable $x_{ij}$ may specify whether the top profile for this segment i is profile j. Finally, for any segment $i$, the profile $j$ can either be or not be the top profile, so $x_{ij}$ should be either 0 or 1, which leads to another series of conditions for any i and j: $x_{ij} \in \{0,1\}$, which means that the variable $x_{ij}$ may be a value from the set of 0 or 1, where 0 means the segment i and profile j is not the top profile and the 1 means the segment i and profile j is the top profile. As a summary, top profile selection system 110 formulates the following model given a minimum data saved ratio R as the QoS target:

$$\min \quad VQL(X) \qquad (1)$$

$$\text{such that (s.t.)} \quad DSR(X) \geq R \qquad (2)$$

$$\sum_{j=0}^{M-1} x_{ij} = 1 \quad , \forall i \qquad (3)$$

$$x_{ij} \in \{0,1\} \quad , \forall i,j \qquad (4)$$

Condition 1 states video quality loss should be minimized such that the following constraints are applied: Condition 2 is the data saved ratio $DSR(X)$ meets (e.g., is greater than or equal to) the lower bound R. Conditions 3 and 4 indicate that one and only one profile is selected as the top profile for each segment. Although the formulation above is provided, other models may be used to select the top profile, such as video quality may be maximized.

At 310, when QoS target is the maximum tolerable video quality loss, if the maximum tolerable video quality loss = L (a non-negative value), top profile selection system 110 maximizes the data saved ratio. The objective function for the model to maximize is the data saved ratio given the top profile decision X, e.g., $DSR(X)$ according to a second set of conditions.

As for the second set of conditions, the data saved ratio is maximized such that the following. Condition 2 is the video quality loss *VQL(X)* under the given top profile decision *X* meets (e.g., should not be greater than) the required upper bound *L,* which leads to *VQL(X) ≤ L.* The third and fourth conditions are the same as constraints (3) and (4) above. To summarize, top profile selection system 110 formulates the following given a maximum tolerable video quality loss as the QoS target:

$$\max \quad DSR(X) \qquad\qquad (5)$$

$$\text{s.t.} \quad VQL(X) \leq L \qquad\qquad (6)$$

$$\sum_{j=0}^{M-1} x_{ij} = 1 \qquad , \forall i \qquad (7)$$

$$x_{ij} \in \{0,1\} \qquad , \forall i,j \qquad (8)$$

Condition 1 states the data saved ratio should be maximized. Condition 2 states the video quality loss *VQL(X)* under the given top profile decision *X* should less than or equal to the required upper bound *L.* Conditions 3 and 4 indicate that one and only one profile is selected as the top profile for each segment. Although the formulation above is provided, other models may be used to select the top profile, such as data loss may be minimized.

At 312, top profile selection system 110 solves the model based on the target metric and performance values to output the top profile constraints for each segment that meet the conditions. For example, top profile selection system 110 solves the model based on the set of conditions using the performance values. The output of the model is the respective top profile for each segment. For example, the top profile constraints may list which profile is the top profile for each segment. The top profile constraints may be in different formats. For example, the top profile constraints may be a series of values, such as 0 and 1 for each segment and profile combination. In other embodiments, the top profile constraints may identify a top profile for each segment. Other ways of identifying the top profiles in the top profile constraints may be used.

Example

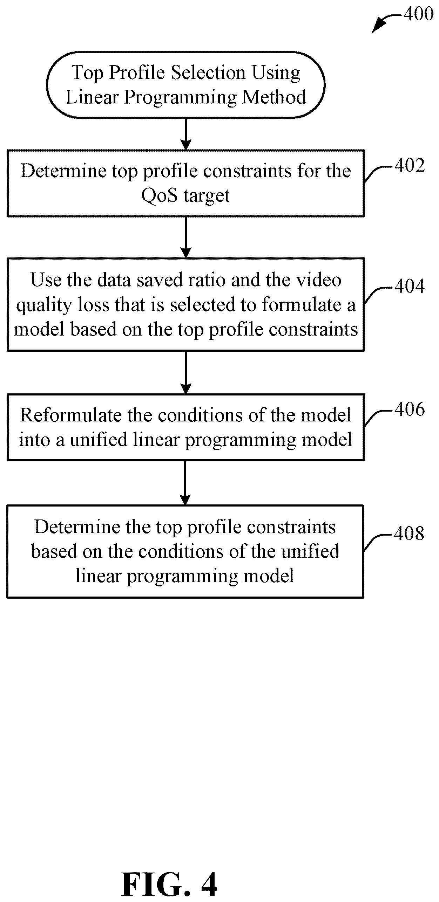

The following will describe an example to determine the top profile constraints. FIG. 4 depicts a simplified flowchart 400 of a method for performing the top profile selection using a linear programming method according to some embodiments.

At 402, top profile selection system 110 determines the top profile constraints for the QoS target, which may be the minimum data saved ratio or maximum video quality loss.

At 404, top profile selection system 110 uses the minimum data saved ratio and the maximum video quality loss that is selected to formulate a model based on the top profile constraints.

For example, when the QoS target is minimum data saved ratio, the above four conditions (1) to (4) are:

$$\min \quad VQL(X) = 79 - \frac{1}{2}[60(x_{00} + x_{10}) + 77.5(x_{01} + x_{11}) + 79(x_{02} + x_{12})]$$

$$\text{s.t.} \quad DSR(X) = \frac{\overline{U} - U(X)}{\overline{U}}$$

$$= \frac{21.914 - [2.44(x_{00} + x_{10}) + 5.107(x_{01} + x_{11}) + 10.957(x_{02} + x_{12})]}{21.914}$$

$$\geq R$$

$$x_{00} + x_{01} + x_{02} = 1$$

, when *i* = 0

$$x_{10} + x_{11} + x_{12} = 1$$

, when $i$ = 1

$$x_{00} \in \{0,1\}$$

, when $i$ = 0, $j$ = 0

$$x_{01} \in \{0,1\}$$

, when $i$ = 0, $j$ = 1

$$x_{02} \in \{0,1\}$$

, when $i$ = 0, $j$ = 2

$$x_{10} \in \{0,1\}$$

, when $i$ = 1, $j$ = 0

$$x_{11} \in \{0,1\}$$

, when $i$ = 1, $j$ = 1

$$x_{12} \in \{0,1\}$$

, when $i$ = 1, $j$ = 2

In the above, the predicted video quality loss *VQL(X)* is shown with the top profile decision $X = [x_{00}, x_{01}, x_{02}, x_{10}, x_{11}, x_{12}]$ as its variable. The data saved ratio (DSR) is shown, which is the relative delta between the predicted data usage with the constraint $U$ and the predicted data usage without the constraint $\overline{U}$, e.g., $DSR(X) = \dfrac{\overline{U} - U(X)}{\overline{U}}$. The next two conditions $x_{00} + x_{01} + x_{02} = 1$ and $x_{10} + x_{11} + x_{12} = 1$ indicate that only one segment and profile combination will equal 1 and the rest will be zero. Also, the last six conditions indicate each segment and profile combination will be either the value of 0 or 1.

Similarly, when the QoS target is maximum video quality loss, the above four conditions (5) to (8) are:

$$\max \quad DSR(X)$$
$$= \frac{21.914 - [2.44(x_{00} + x_{10}) + 5.107(x_{01} + x_{11}) + 10.957(x_{02} + x_{12})]}{21.914}$$

$$\text{s.t.} \quad VQL(X) = \overline{Q} - Q(X)$$
$$= 79$$
$$- \frac{1}{2}[60(x_{00} + x_{10}) + 77.5(x_{01} + x_{11}) + 79(x_{02} + x_{12})] \leq L$$

$$x_{00} + x_{01} + x_{02} = 1$$

, when $i$ = 0

$$x_{10} + x_{11} + x_{12} = 1$$

, when $i = 1$

$$x_{00} \in \{0,1\}$$

, when $i = 0, j = 0$

$$x_{01} \in \{0,1\}$$

, when $i = 0, j = 1$

$$x_{02} \in \{0,1\}$$

, when $i = 0, j = 2$

$$x_{10} \in \{0,1\}$$

, when $i = 1, j = 0$

$$x_{11} \in \{0,1\}$$

, when $i = 1, j = 1$

$$x_{12} \in \{0,1\}$$

, when $i = 1, j = 2$

In the above, the predicted data saved ratio $DSR(X)$ is shown with the top profile decision $X$ as its variable. The video quality loss (VQL) is shown, the delta between the predicted average video quality with the constraint $Q$ and the predicted average video quality without the constraint $\overline{Q}$, e.g., $VQL(X) = \overline{Q} - Q(X)$. The next two conditions $x_{00} + x_{01} + x_{02} = 1$ and $x_{10} + x_{11} + x_{12} = 1$ indicate that only one segment and profile combination will equal 1 and the rest will be zero. Also, the last six conditions indicate each segment and profile combination will be either the value of 0 or 1.

Top profile selection system 110 may want to solve the model using a specific form that may provide optimal results. For example, the following may form may be used:

$$\min \quad c^T x \qquad (9)$$

$$\text{s.t.} \quad A_{ub} x \le b_{ub} \qquad (10)$$

$$A_{eq} x = b_{eq} \qquad (11)$$

$$l \le x \le u \qquad (12)$$

where $x$ is a vector of decision variables; $c$, $b_{ub}$, $b_{eq}$, $l$ and $u$ are vectors; and $A_{ub}$ and $A_{eq}$ are matrices. In addition, if all the elements in vector $x$ are integer, the problem becomes an Integer Linear Programming (ILP) problem.

For conditions (1)-(4) in the model, e.g., the model with a minimum data saved ratio can be equivalently rewritten as:

$$\min \quad \sum_{i=0}^{N-1} \sum_{j=0}^{M-1} -\frac{Q_{ij}}{N} x_{ij}$$

s.t.
$$\frac{U(X)}{\overline{U}} = \sum_{i=0}^{N-1}\sum_{j=0}^{M-1}\frac{U_{ij}}{\overline{U}}x_{ij} \leq 1 - R$$

$$\sum_{j=0}^{M-1}x_{ij} = 1 \qquad\qquad , \forall i$$

$$x_{ij} \in \{0,1\} \qquad\qquad , \forall i,j$$

Therefore, the vectors and matrices are:

- $x = [x_{00}, x_{01}, \dots, x_{0(M-1)}, x_{10}, \dots, x_{1(M-1)}, \dots, x_{(N-1)0}, \dots, x_{(N-1)(M-1)}]$ is a vector with $N \times$ M elements, where each element $x_{ij}$ is from the elements in $X$ in the previous sections, representing whether profile j should be the top profile for segment i.

- $c = [-\frac{Q_{00}}{N}, -\frac{Q_{01}}{N}, \dots, -\frac{Q_{0(M-1)}}{N}, -\frac{Q_{10}}{N}, \dots, -\frac{Q_{1(M-1)}}{N}, \dots, -\frac{Q_{(N-1)0}}{N}, \dots, -\frac{Q_{(N-1)(M-1)}}{N}]$ is also a vector with $N \times M$ elements, where $Q_{ij}$ refers to the coefficients when computing the video quality Q(X), which is also the expected video quality for segment i if the top profile for it is profile j. Here all the elements are set to negative because in the original objective function $VQL(X) = \overline{Q} - Q(X)$, the coefficients for vector $X$ are negative. Besides, the constant $\overline{Q}$ is omitted in the rewritten objective function. Since $\overline{Q}$ is a constant independent from variable $X$, minimizing Q - Q(X) is equivalent to minimizing -Q(X).

- $A_{ub} = [\frac{U_{00}}{\overline{U}}, \frac{U_{01}}{\overline{U}}, \dots, \frac{U_{0(M-1)}}{\overline{U}}, \frac{U_{10}}{\overline{U}}, \dots, \frac{U_{1(M-1)}}{\overline{U}}, \dots, \frac{U_{(N-1)0}}{\overline{U}}, \dots, \frac{U_{(N-1)(M-1)}}{\overline{U}}]$ is a matrix with only 1 row and $N \times M$ columns, where $U_{ij}$ refers to the coefficients when computing the data usage U(X).

- $b_{ub} = [1 - R]$ is a vector with only 1 element, where $R$ is the minimum data saved ratio required.

- $A_{eq} = [a_0, a_1, \dots, a_{N-1}]$ is a matrix with N rows and $N \times M$ columns. Therefore, each row $a_k$ is a vector with $N \times M$ elements. Suppose $a_k = [e_{00}^k, e_{01}^k, \dots, e_{0(M-1)}^k, e_{10}^k, e_{11}^k, \dots, e_{1(M-1)}^k, \dots, e_{(N-1)0}^k, e_{(N-1)1}^k, \dots, e_{(N-1)(M-1)}^k]$. We let $e_{kj}^k = 1$, and $e_{ij}^k = 0$ for all other elements where $i \neq k$.

- $b_{eq}$ is a vector with N elements whose values are all 1.

- $l$ is a vector with $N \times M$ elements whose values are all 0.

- $u$ is a vector with $N \times M$ elements whose values are all 1.

At 406, by setting the vectors and matrices as above, top profile selection system 110 reformulates the model with conditions (1)-(4) into a unified linear programming model as shown with conditions (9)-(12):

$$\min \qquad c^T x \qquad\qquad (9)$$

$$\text{s.t.} \qquad A_{ub}x \leq b_{ub} \qquad (10)$$

$$A_{eq}x = b_{eq} \qquad (11)$$

$$l \leq x \leq u \qquad (12)$$

Then, at 408, top profile selection system 110 determines the optimal top profiles based on conditions (9)-(12). Here, the output from the model is the top profile selection for segments.

Continuing to use the previous example where there are 2 segments and 3 profiles and the minimum data saved ratio is set to 5% (e.g., $R = 0.05$). After top profile selection system 110 converts the original model with conditions (1)-(4) to the unified linear programming model with conditions (9)-(12), the vectors and matrices are:

- $x = [x_{00}, x_{01}, x_{02}, x_{10}, x_{11}, x_{12}]$, which is a variable to be decided by solving the model.

$$c = \left[-\frac{Q_{00}}{N}, -\frac{Q_{01}}{N}, -\frac{Q_{02}}{N}, -\frac{Q_{10}}{N}, -\frac{Q_{11}}{N}, -\frac{Q_{12}}{N}\right] =$$
$$[-30, -38.75, -39.5, -30, -38.75, -39.5].$$

$$A_{ub} = \left[\frac{U_{00}}{\bar{U}}, \frac{U_{01}}{\bar{U}}, \frac{U_{02}}{\bar{U}}, \frac{U_{10}}{\bar{U}}, \frac{U_{11}}{\bar{U}}, \frac{U_{12}}{\bar{U}}\right] = \left[\frac{2.44}{21.914}, \frac{5.107}{21.914}, \frac{10.957}{21.914}, \frac{2.44}{21.914}, \frac{5.107}{21.914}, \frac{10.957}{21.914}\right].$$

$$b_{ub} = [1 - R] = [0.95].$$

$$A_{eq} = \begin{bmatrix} 1,1,1,0,0,0 \\ 0,0,0,1,1,1 \end{bmatrix}.$$

$$b_{eq} = [1,1].$$

$$l = [0,0,0,0,0,0].$$

$$u = [1,1,1,1,1,1]$$

The output is $X^* = [x_{00}, x_{01}, x_{02}, x_{10}, x_{11}, x_{12}] = [0,0,1,0,1,0]$. It means that the top profile decision is [2, 1], e.g., the top profile is profile #2 for segment 0 and profile #1 for segment 1 because only $x_{02}$ and $x_{11}$ are equal to 1. For example, top profile selection system 110 determined the top profiles directly by solving the model. A value of "1" for the segment indicates that this profile is determined for the segment. For the variable $x_{02}$, which is segment 0 and profile #2, the value is equal to 1. Also, for segment 1, the variable $x_{11}$ indicates segment 1 and profile #1 are the top profile (equal to 1). With this top profile decision, there is a video quality loss

$$VQL(X) = 79 - \frac{1}{2}[60(x_{00} + x_{10}) + 77.5(x_{01} + x_{11}) + 79(x_{02} + x_{12})] \quad \text{of 0.75 by limiting the top}$$

profile, and a data saved ratio

$$DSR(X) = \frac{\bar{U} - U(X)}{\bar{U}} = \frac{21.914 - [2.44(x_{00}+x_{10}) + 5.107(x_{01}+x_{11}) + 10.957(x_{02}+x_{12})]}{21.914} \approx 26.70\% \quad .$$

Although top profile decision [2, 2] (e.g., $x = [0,0,1, 0,0,1]$) can achieve a lower video quality loss of 0, the data saved ratio 0% does not meet the constraint (2). Also, although top profile decision [1, 1] (i.e. $x = [0,1,0, 0,1,0]$) can save more data (by about 53.39%), the video quality loss achieved by it is 1.5, which exceeds the one achieved by $x^* = [0,0,1,0,1,0]$, preventing it to be the optimal solution. It may be possible that other combinations may be the same, such as $x = [0,1,0, 0,0,1]$ (top profile decision [1,2]) is another optimal solution that may be the output, with the same video quality loss 0.75 and data saved ratio about 26.70% as $x^*$. This can also be used as the top profile constraints and sent to client device 104.

Similar to above, the model described in (5)-(8), e.g., the model with maximum data saved ratio, top profile selection system 110 can reformulate the model as:

$$\min \quad \sum_{i=0}^{N-1} \sum_{j=0}^{M-1} U_{ij} x_{ij}$$

$$\text{s.t.} \quad \sum_{i=0}^{N-1} \sum_{j=0}^{M-1} \left(-\frac{Q_{ij}}{N}\right) x_{ij} \leq L - \bar{Q}$$

$$\sum_{j=0}^{M-1} x_{ij} = 1 \qquad , \forall i$$

$$x_{ij} \in \{0,1\} \qquad , \forall i,j$$

The vectors $x$, $b_{eq}$, $l$ and $u$, together with the matrix $A_{eq}$ remain unchanged. The changed ones are:

- $c = [U_{00}, U_{01}, \ldots, U_{0(M-1)}, U_{10}, \ldots, U_{1(M-1)}, \ldots, U_{(N-1)0}, \ldots, U_{(N-1)(M-1)}]$ is a vector with $N \times M$ elements, where $U_{ij}$ still refers to the coefficients when computing the data usage U(X). Since $\bar{U}$ is also a constant independent from variable $X$,

  maximizing $DSR(X) = \frac{\bar{U} - U(X)}{\bar{U}}$ is equivalent to minimizing U(X), which leads to this rewritten objective function.

- $A_{ub} = \left[-\frac{Q_{00}}{N}, -\frac{Q_{01}}{N}, \ldots, -\frac{Q_{0(N-1)}}{N}, -\frac{Q_{10}}{N}, \ldots, -\frac{Q_{1(M-1)}}{N}, \ldots, -\frac{Q_{(N-1)(M-1)}}{N}, \ldots, -\frac{Q_{(N-1)(M-1)}}{N}\right]$ is a matrix with only 1 row and $N \times M$ columns, where $Q_{ij}$ still refers to the coefficients when computing the video quality Q(X).

- $b_{ub} = [L - \bar{Q}]$ is a vector with only 1 element, where $L$ is the maximum video quality loss required.

By setting the vectors and matrices as this, top profile selection system 110 reformulates the model with conditions (5)-(8) into the unified linear programming model with conditions (9)-(12), and thus solves the problem.

Using the previous example where there are 2 segments and 3 profiles, and the maximum video quality loss is set to 5 (e.g., L = 5). After converting the original model with conditions (5)-(8) to the unified linear programming model with conditions (9)-(12), the vectors and matrices are:

- $x = [x_{00}, x_{01}, x_{02}, x_{10}, x_{11}, x_{12}]$, which is a variable to be decided by solving the model.

- 

$$c = [U_{00}, U_{01}, U_{02}, U_{10}, U_{11}, U_{12}] = [2.44, 5.107, 10.957, 2.44, 5.107, 10.957].$$

- 

$$A_{ub} = \left[-\frac{Q_{00}}{N}, -\frac{Q_{01}}{N}, -\frac{Q_{02}}{N}, -\frac{Q_{10}}{N}, -\frac{Q_{11}}{N}, -\frac{Q_{12}}{N}\right] =$$
$$[-30, -38.75, -39.5, -30, -38.75, -39.5].$$

- 

$$b_{ub} = [L - \bar{Q}] = [-74].$$

-

$$A_{eq} = \begin{bmatrix} 1,1,1,0,0,0 \\ 0,0,0,1,1,1 \end{bmatrix}.$$

- 

$$b_{eq} = [1,1].$$

- 

$$l = [0,0,0,0,0,0].$$

- 

$$u = [1,1,1,1,1,1]$$

The output is $X^* = [0,1,0,0,1,0]$. This means that the top profile decision is [1, 1], e.g., the top profile is profile #1 for both segment 0 and segment 1. For example, top profile selection system 110 determined the top profiles directly by solving the model. For the variable $x_{01}$, which is segment 0 and profile #1, the value is equal to 1. Also, for segment 1, the variable $x_{11}$ indicates segment 1 and profile #1 are the top profile (equal to 1). With this top profile decision, the data saved ratio is $DSR(X) = \frac{21.914 - [2.44(x_{00}+x_{10}) + 5.107(x_{01}+x_{11}) + 10.957(x_{02}+x_{12})]}{21.914} \approx 53.39\%$ by limiting the top profile, and the video quality loss is

$$VQL(X) = 79 - \frac{1}{2}[60(x_{00} + x_{10}) + 77.5(x_{01} + x_{11}) + 79(x_{02} + x_{12})] = 1.5 .$$

Although top profile decision [1, 0] (e.g., $x = [0, 1, 0, 1, 0, 0]$) can save more data usage with a data saved ratio about 65.56%, the video quality loss 10.25 does not meet the condition (6). Although top profile decision [2, 1] (e.g., $x = [0,0,1, 0,1,0]$) can achieve lower video quality loss (of 0.75), the data saved ratio achieved by it is 26.70%, which is lower than the one achieved by X*, preventing it to be the optimal solution.

Conclusion

Parameter adaptation system 105 may provide a process to predict the performance of metrics for top profile decisions. The process offers flexibility in setting quality of service targets, such as the maximum quality loss or minimum data saved ratio may be set based on different preferences. The process may be adapted in real time to respond dynamically to changes in network conditions, content characteristics, and user preferences. This may improve the efficiency of the delivery of content, the service of delivering the content, and also the viewing experience. Also, the data saved ratio and maximum quality loss that are used can be understood in relatable terms, which may be practical and have physical meaning, which allows the tuning of the metrics to be understood. The resulting performance of downloading the video may then be evaluated. Also, by formulating the problem into a linear programming optimization model and solving it, the top profile constraints can be determined directly from the model, and optimality of the solution (e.g., the top profile constraints for all the video segments) is ensured. By building a linear programming optimization model to formulate the problem, the bitrate constraints are the optimal solution of the model. Moreover, getting the output by solving a linear programming model may be also more computationally efficient than a brute-force method that enumerates all the possible solutions and finds the most appropriate one.

System

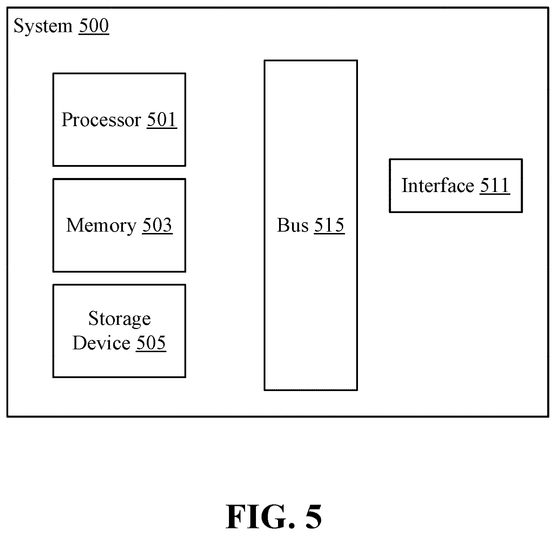

FIG. 5 illustrates one example of a computing device according to some embodiments. According to various embodiments, a system 500 suitable for implementing embodiments described herein includes a processor 501, a memory 503, a storage device 505, an interface 511, and a bus 515 (e.g., a PCI bus or other interconnection fabric.) System 500 may operate as a variety of devices such as server system 102, or any other device or service described herein. Although a particular configuration is described, a variety of alternative configurations are possible. The processor 501 may perform operations such as those described herein. Instructions for performing such operations may be embodied in memory 503, on one or more non-transitory computer readable media, or on some other storage device. Various specially configured devices can also be used in place of or in addition to the processor 501. Memory 503 may be random access memory (RAM) or other dynamic storage devices. Storage device 505 may include a non-transitory computer-readable storage medium holding information, instructions, or some combination thereof, for example instructions that when executed by the processor 501, cause processor 501 to be configured or operable to perform one or more operations of a method as described herein. Bus 515 or other communication components may support communication of information within system 500. The interface 511 may be connected to bus 515 and be configured to send and receive data packets over a network. Examples of supported interfaces include, but are not limited to: Ethernet, fast Ethernet, Gigabit Ethernet, frame relay, cable, digital subscriber line (DSL), token ring, Asynchronous Transfer Mode (ATM), High-Speed Serial Interface (HSSI), and Fiber Distributed Data Interface (FDDI). These interfaces may include ports appropriate for communication with the appropriate media. They may also include an independent processor and/or volatile RAM. A computer system or computing device may include or communicate with a monitor, printer, or other suitable display for providing any of the results mentioned herein to a user.

Any of the disclosed implementations may be embodied in various types of hardware, software, firmware, computer readable media, and combinations thereof. For example, some techniques disclosed herein may be implemented, at least in part, by non-transitory computer-readable media that include program instructions, state information, etc., for configuring a computing system to perform various services and operations described herein. Examples of program instructions include both machine code, such as produced by a compiler, and higher-level code that may be executed via an interpreter. Instructions may be embodied in any suitable language such as, for example, Java, Python, C++, C, HTML, any other markup language, JavaScript, ActiveX, VBScript, or Perl. Examples of non-transitory computer-readable media include, but are not limited to: magnetic media such as hard disks and magnetic tape; optical media such as flash memory, compact disk (CD) or digital versatile disk (DVD); magnetooptical media; and other hardware devices such as read-only memory ("ROM") devices and random-access memory ("RAM") devices. A non-transitory computer-readable medium may be any combination of such storage devices.

In the foregoing specification, various techniques and mechanisms may have been described in singular form for clarity. However, it should be noted that some embodiments include multiple iterations of a technique or multiple instantiations of a mechanism unless otherwise noted. For example, a system uses a processor in a variety of contexts but can use multiple processors while remaining within the scope of the present disclosure unless otherwise noted. Similarly, various techniques and mechanisms may have been described as including a connection between two entities. However, a connection does not necessarily mean a direct, unimpeded connection, as a variety of other entities (e.g., bridges, controllers, gateways, etc.) may reside between the two entities.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" include plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

## Claims

1. A method comprising:

   determining an instance of content to be delivered to a client device, wherein the instance of content includes a plurality of segments that is associated with a plurality of profiles;
   determining a target metric and a bandwidth distribution;
   determining a performance of the target metric based on the bandwidth distribution;
   determining a model for selecting a top profile for the plurality of segments, wherein the model includes a set of conditions;
   solving the model based on the performance of the target metric, wherein solving the model provides a solution that meets the set of conditions and outputs the top profile for each segment; and
   outputting the top profile for each segment for delivery to the client device, wherein the top profile for each segment is used to remove profiles when requesting segments in the plurality of segments during playback of the instance of content.

2. The method of claim 1, wherein solving the model lists one top profile for each segment; and/or
wherein the target metric is selected from a first metric based on data saved and a second metric based on quality loss.

3. The method of claim 1 or 2, wherein the bandwidth distribution is based on a download bandwidth probability; and/or
wherein the bandwidth distribution is based on information from the client device.

4. The method of any one of claims 1 to 3, wherein:

the bandwidth distribution is segmented into a plurality of bandwidth distributions based on different features, and
a bandwidth distribution is selected based on a feature associated with the client device.

5. The method of any one of claims 1 to 4, wherein determining the target metric comprises:

receiving a target value for the target metric, and
wherein, optionally, the target value for the target metric is adaptable per instance of content or client device.

6. The method of any one of claims 1 to 5, wherein determining the model for selecting the top profile comprises:
selecting the model based on the target metric, wherein a first target metric uses a first model and a second target metric uses a second model.

7. The method of claim 6, wherein:

the first model includes a first set of conditions for use in determining the top profile; and
the second model includes a second set of conditions for use in determining the top profile.

8. The method of claim 7, wherein:
the first set of conditions specify given a minimum data saved ratio of a value:
a video quality loss is minimized given the top profile for a segment such that:

the data saved ratio meets the value, and
there is only one and only one top profile for each segment of the plurality of segments.

9. The method of claim 7 or 8, wherein:
the second set of conditions specify given a maximum tolerable video quality loss of a value:
a data saved ratio is maximized given the top profile for a segment such that:

the video quality loss meets the value, and
there is only one and only one top profile for each segment of the plurality of segments.

10. The method of any one of claims 1 to 9, wherein solving the model to determine the top profile comprises:

reformulating the model into a linear programming problem; and
solving the linear programming problem, wherein an output of the model comprises a top profile for each segment in the plurality of segments,
wherein, optionally, reformatting the model into the linear programming problem comprises:

converting the set of conditions into a second set of conditions for the linear programming problem; and
inputting the performance of the target metric into the second set of conditions to solve the linear programming problem.

11. The method of any one of claims 1 to 10, further comprising:
sending the top profile for each segment to the client device, wherein the client device uses the top profile to remove profiles when requesting segments in the plurality of segments during playback.

12. A non-transitory computer-readable storage medium having stored thereon computer executable instructions, which when executed by a computing device, cause the computing device to be operable for:

determining an instance of content to be delivered to a client device, wherein the instance of content includes a plurality of segments that is associated with a plurality of profiles;

determining a target metric and a bandwidth distribution;

determining a performance of the target metric based on the bandwidth distribution;

determining a model for selecting a top profile for the plurality of segments, wherein the model includes a set of conditions;

solving the model based on the performance of the target metric, wherein solving the model provides a solution that meets the set of conditions and outputs the top profile for each segment; and

outputting the top profile for each segment for delivery to the client device, wherein the top profile for each segment is used to remove profiles when requesting segments in the plurality of segments during playback of the instance of content.

13. The non-transitory computer-readable storage medium of claim 12, wherein solving the model lists one top profile for each segment; and/or

wherein determining the model for selecting the top profile comprises:

selecting the model based on the target metric, wherein a first target metric uses a first model and a second target metric uses a second model.

14. The non-transitory computer-readable storage medium of claim 12 or 13, wherein solving the model to determine the top profile comprises:

reformatting the model into a linear programming problem; and

solving the linear programming problem, wherein an output of the model comprises a top profile for each segment in the plurality of segments.

15. An apparatus comprising:

one or more computer processors; and

a computer-readable storage medium comprising instructions for controlling the one or more computer processors to be operable for:

determining an instance of content to be delivered to a client device, wherein the instance of content includes a plurality of segments that is associated with a plurality of profiles;

determining a target metric and a bandwidth distribution;

determining a performance of the target metric based on the bandwidth distribution;

determining a model for selecting a top profile for the plurality of segments, wherein the model includes a set of conditions;

solving the model based on the performance of the target metric, wherein solving the model provides a solution that meets the set of conditions and outputs the top profile for each segment; and

outputting the top profile for each segment for delivery to the client device, wherein the top profile for each segment is used to remove profiles when requesting segments in the plurality of segments during playback of the instance of content.

**FIG. 1**

```
                                            ↗—200

        ( Performance Prediction Method )

                        │
                        ▼

    ┌─────────────────────────────────────┐
    │ Evaluate the probability of selecting each │ ⟋—202
    │         profile for each segment         │
    └─────────────────────────────────────┘

                        │
                        ▼

    ┌─────────────────────────────────────┐
    │ Predict the average video quality and data │ ⟋—204
    │  usage with a top profile constraint and   │
    │     without a top profile constraint       │
    └─────────────────────────────────────┘

                        │
                        ▼

    ┌─────────────────────────────────────┐
    │   Compute performance values for the    │ ⟋—206
    │ metrics of video quality loss and data  │
    │              saved ratio               │
    └─────────────────────────────────────┘
```

# FIG. 2

300

Top Profile Selection Method

↓

Receive selection of target metric to use for evaluation ⟋302

↓

Determine a model that is used to determine the top profile constraints ⟋304

↓

306

Minimum data saved target QoS selected?

Yes ← → No

310

Minimize the video quality loss with a first set of conditions ⟋308

Maximize the data saved ratio

↓

Solve the model based on the target metric and performance values to output the top profile constraints for each segment ⟋312

# FIG. 3

400

Top Profile Selection Using
Linear Programming Method

Determine top profile constraints for the
QoS target — 402

Use the data saved ratio and the video
quality loss that is selected to formulate a
model based on the top profile constraints — 404

Reformulate the conditions of the model
into a unified linear programming model — 406

Determine the top profile constraints
based on the conditions of the unified
linear programming model — 408

FIG. 4

System 500

Processor 501

Memory 503

Storage Device 505

Bus 515

Interface 511

**FIG. 5**

| | Europäisches Patentamt European Patent Office Office européen des brevets | **EUROPEAN SEARCH REPORT** | **Application Number** EP 25 20 5427 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 993 365 A1 (HULU LLC [US]) 4 May 2022 (2022-05-04) | 1-3,5-7, 11-13,15 | INV. H04N21/2343 |
| Y | * paragraph [0010] - paragraph [0015] * * paragraph [0027] - paragraph [0030] * * paragraph [0043] - paragraph [0050] * * figures 1-12 * | 4,8-10, 14 | H04N21/24 H04N21/845 H04N21/234 |
| Y | EP 3 993 419 A1 (HULU LLC [US]) 4 May 2022 (2022-05-04) * figures 11-13 * | 4 | |
| Y | US 2024/305842 A1 (LIU CHEN [CN] ET AL) 12 September 2024 (2024-09-12) * paragraph [0057] - paragraph [0064] * * figures 8-11 * | 8,9 | |
| Y | US 10 897 654 B1 (WEI HAI [US] ET AL) 19 January 2021 (2021-01-19) * column 15, line 35 - column 16, line 4 * | 10,14 | |
| | | | TECHNICAL FIELDS SEARCHED (IPC) H04N |

The present search report has been drawn up for all claims

| Place of search | Date of completion of the search | Examiner |
|---|---|---|
| The Hague | 29 December 2025 | Arpaci, Mutlu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 5427

This annex lists the patent family members relating to the patent documents cited in the above-mentioned European search report.
The members are as contained in the European Patent Office EDP file on
The European Patent Office is in no way liable for these particulars which are merely given for the purpose of information.

29-12-2025

| Patent document cited in search report | | Publication date | Patent family member(s) | | Publication date |
|---|---|---|---|---|---|
| EP 3993365 | A1 | 04-05-2022 | CN | 114449353 A | 06-05-2022 |
| | | | EP | 3993365 A1 | 04-05-2022 |
| | | | JP | 7626399 B2 | 07-02-2025 |
| | | | JP | 2022074119 A | 17-05-2022 |
| | | | JP | 2023175841 A | 12-12-2023 |
| | | | KR | 20220059425 A | 10-05-2022 |
| | | | US | 2022141513 A1 | 05-05-2022 |
| EP 3993419 | A1 | 04-05-2022 | CN | 114448967 A | 06-05-2022 |
| | | | EP | 3993419 A1 | 04-05-2022 |
| | | | JP | 7314234 B2 | 25-07-2023 |
| | | | JP | 2022074118 A | 17-05-2022 |
| | | | KR | 20220058454 A | 09-05-2022 |
| | | | US | 11277620 B1 | 15-03-2022 |
| | | | US | 2022159268 A1 | 19-05-2022 |
| US 2024305842 | A1 | 12-09-2024 | CN | 118632002 A | 10-09-2024 |
| | | | EP | 4429235 A1 | 11-09-2024 |
| | | | JP | 7686728 B2 | 02-06-2025 |
| | | | JP | 2024125994 A | 19-09-2024 |
| | | | JP | 2025128149 A | 02-09-2025 |
| | | | KR | 20240136212 A | 13-09-2024 |
| | | | US | 2024305842 A1 | 12-09-2024 |
| | | | US | 2025126309 A1 | 17-04-2025 |
| US 10897654 | B1 | 19-01-2021 | NONE | | |

EPO FORM P0459

For more details about this annex : see Official Journal of the European Patent Office, No. 12/82